# EUROPEAN PATENT APPLICATION

(11) **EP 3 284 551 A1**
(43) Date of publication of application: **21.02.2018**
(21) Application number: 16275117.6
(22) Date of filing: 19.08.2016
(51) Int. Cl.: B22F 3/10, B23K 9/04, B22F 3/105, B23P 6/00, B23K 26/342, B22F 3/24, B22F 7/06

(54) **ADDITIVE LAYER MANUFACTURING**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A method for reconditioning of a wheel for a tracked vehicle by additive layer manufacturing is provided. The method includes the steps of using a heat source such as a laser to melt the surface of the wheel and form a weld pool; adding wire or metallic material to the weld pool and moving the heat source relative to the wheel so as to progressively form a new layer of metallic material on the wheel and repeating the above steps as required to form the recondition wheel layer by layer.

## Description

This invention relates to additive layer manufacturing (ALM) and in particular to a method of reconditioning a wheel for a tracked vehicle.

Before the present invention in described in further detail, it is to be understood that the invention is not limited to the particular embodiments described, as such may, of course, vary. It is also to be understood that the terminology used herein is for the purpose of describing particular embodiments only, and is not intended to be limiting, since the scope of the present invention will be limited only by the appended claims.

According to the first aspect of the invention there is provided a method of reconditioning a wheel for a tracked vehicle by additive layer manufacturing comprising the steps of:-
I. using a heat source to apply heat to a portion of the wheel sufficient to melt said portion of the wheel
II. adding metallic material to the melted portion of the wheel and moving the heat source relative to the wheel whereby progressively to cause a formed layer of metallic material on the wheel
repeating steps I and II as required whereby to form a recondition wheel.

Known methods of reconditioning wheels for tracked vehicles use metal spraying techniques. When a wheel for a tracked vehicle is reconditioned using metal spraying techniques the old layer of metal spray first needs to be removed which requires undercutting, which is a process of removing some of the original parent material. Therefore repeated undercutting steps prior to reconditioning of the wheel, eventually results in the integrity of the wheel being compromised.

The use of additive layer manufacturing removes the requirement of undercutting to prepare the surface prior to using metal spray, and therefore the integrity of the wheel is prolonged. If old metal spray is present it may be desirable to use additive layer manufacturing to add metallic material directly to the existing metal spray. The additive layer manufacturing process creates a metallurgical bond with the parent material, compared to the weaker mechanical bond created with using metal spraying techniques. Therefore given the weaker bonding, during prior art metal spraying techniques, the old metal spray layers and some parent material are undercut, to provide a fresh surface of parent material, on which to metal spray. Simply applying a fresh layer of metal spray to an existing metal spray layer, may lead to the delamination of the lowest metal spray layer, which may compromise the integrity of the repair.

Additive layer manufacturing also wastes less metallic material than metal spraying techniques, as the metal used in the additive layer manufacturing is applied directly to the wheel, rather than metal material being sprayed, some of which will not impinge on the wheel to be repaired.

Preferably the heat source is a laser.

Preferably the metallic material is a powder.

In a further arrangement of the invention the method may further comprise the step of controlling the rate of cooling of the formed layer to bring the formed layer to a state of crystallisation. The method may further comprise the step of applying forced cooling the wheel or the wheel and the formed layer.

Heating and rapid cooling could cause the wheel and/or formed layer to become brittle, deform and crack, so the rate of cooling of the wheel and/or the formed layer is controlled to prevent deforming and cracking from occurring. Techniques to control the rate of cooling may include using a slower travel speed for the heat source, reducing the power of the heat source, using further heat treatment, forced gas cooling, water spray cooling or cryogenic cooling.

In a further arrangement of the invention the method further comprises the step of stress relieving the formed layer.

Differences in the melting points of the wheel and the formed layer may result in deforming or stress cracks being introduced into the formed layer so the stress relieving the formed layer is desirable.

The method of stress relieving may be undertaken by applying ultra-sonic impact treatment to the formed layer. Ultra-sonic impact treatment applies small amounts of force at high frequency to work harden the formed layer. Other stress relieving techniques may be used including applying heat treatment to the formed layer or peening.

In a further arrangement of the invention the method may further comprise a step of pre-heating the wheel prior to step I.

Pre-heating the wheel prior to step I minimises cracking of the wheel and the formed layer.

In a further arrangement of the invention the method may further comprise a step of adding a bonding layer to the wheel between step I and step II.

Adding a bonding layer between step I and step II provides compatibility between the wheel and the formed layer which improves bond strength, reduces the risk of cracks in the formed layer and the wheel. Further it may improve the resistance of the formed layer to corrosion and may mitigate corrosion propagating into the wheel.

Preferably the bonding layer is selected from aluminium bronze.

Preferably the formed layer of metallic material on the wheel has a thickness of at least 3mm, thickness may be adjusted to match the required durability and economy of wear of the formed layer.

In a further arrangement of the invention the formed layer of metallic material on the wheel may be selected from a steel, preferably stainless steel, preferably the stainless steel is a high chrome stainless steel, to reduce the risk of corrosion.

In a further arrangement of the invention the heat source may be moved relative to the wheel resulting in overlap of the formed layer of metallic material on the wheel.

Overlapping the formed layer of metallic material on the wheel results in the build-up of metallic material thickness and/or increased areal coverage.

Preferably the formed layer of metallic material on the wheel forms an elongate bead or elongate ridge.

In a further arrangement of the invention a protective gas is used during the formation of the bonding layer or formed layer of metallic material on the wheel.

Using a protective gas during the formation of the bonding layer or formed layer of metallic material prevents exposure of the melted portion to oxygen, nitrogen and hydrogen contained in the air atmosphere. The reaction of these elements with the melted portion may create metallurgical weaknesses, including porosity (holes within the formed layer) and eventually cracking.

The additive layer manufacturing method may be selected from laser blown powder manufacture, laser powder bed manufacture, or wire arc additive manufacture.

According to a further aspect of the invention there is provided a recondition wheel for a tracked vehicle, which has been reconditioned using the method described herein.

The invention will now be described by way of example with reference to the accompanying drawings of which:-
Figure 1 shows a side view of a repair to a wheel of a tracked vehicle.
Figure 2 shows a cross section of multiple repairs to a wheel of a tracked vehicle.
Figure 3 shows apparatus for implementing the method of the invention.

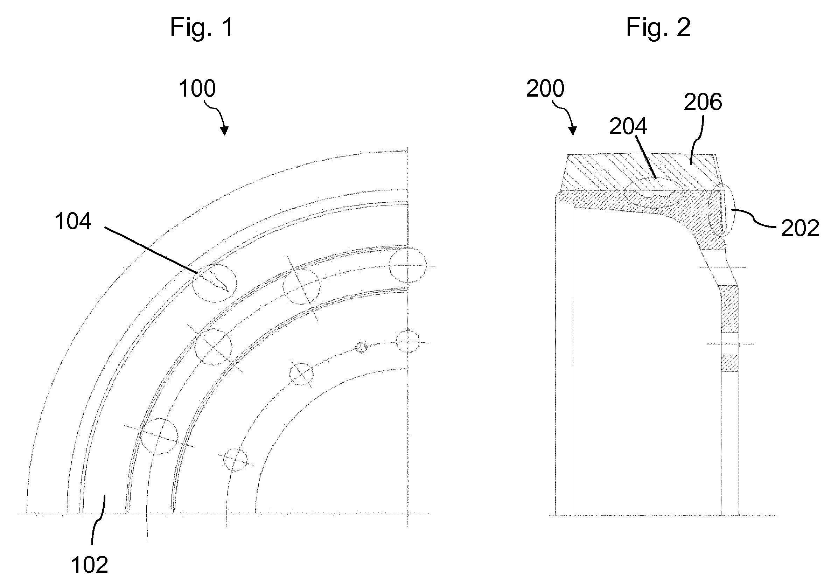

Referring to Figure 1, there is provided an orthogonal view of a section of a wheel 100 for a tracked vehicle. The wheel 100 comprises an annular wear strip 102 which exhibits damage 104. The damage 104 to the annular wear strip 102 occurs due to the movement of elements of the continuous track of the tracked vehicle against the wear strip 102 and in particular the track horn (not shown).

Referring to Figure 2, there is provided a cross section of a reconditioned wheel 200 for a tracked vehicle of Figure 1. Figure 2 shows a replacement wear strip 202 and also a repair 204 to the outer circumference of the wheel 200. The replacement wear strip 202 and repair 204 are a formed layer of metallic material, deposed by a method according to the invention. Once the damage has been repaired 202, 204 the wheel 200 has a rubber tyre 206 placed on the outer circumference of the wheel 200.

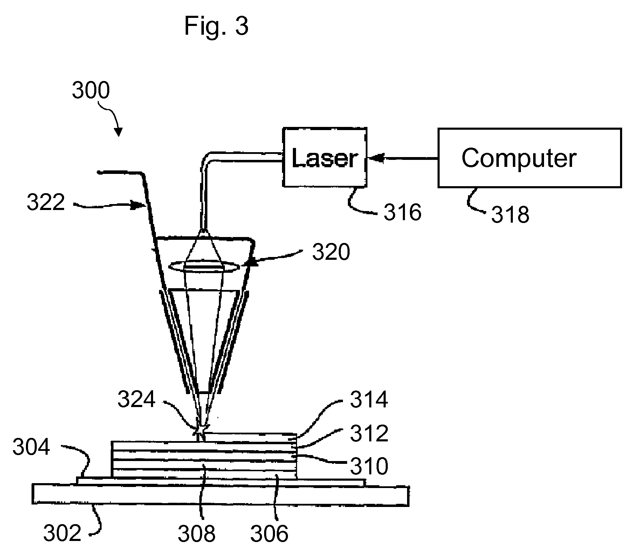

Referring to Figure 3, an apparatus for reconditioning a wheel for a tracked vehicle 300 is provided comprising a base plate 302 configured to receive a wheel 304 on to which successive layers of metallic material 308, 310, 312, 314 are built-up as described hereinafter. A bonding layer 306 and 312 may be located between the wheel 304 and layers of metallic material 308, 310, 312, 314 to enhance bonding. A laser generator 316 is controlled by a computer 318 to deliver a laser beam to focussing optics 320, which focus the laser beam to a spot 324 on the surface of the wheel. A metallic material delivery system 322 delivers metallic material to the vicinity of the laser spot 324 on the wheel surface. The metallic material may be delivered coaxially.

The laser generator 316 and focussing optics 320 are mounted so as to be moveable under the control of the computer 318 in the X-Y plane parallel to the base plate 302, and vertically in the Z direction orthogonal to it. The laser spot 324 thus can be directed to any point in the working envelope in the X-Y plane, and vertically so as to accommodate wheels of different size and type, and regions of different height within the wheel.

## Claims

1. A method of reconditioning a wheel for a tracked vehicle by additive layer manufacturing comprising the steps of:-
a) using a heat source to apply heat to a portion of the wheel sufficient to melt said portion of the wheel;
b) adding metallic material to the melted portion of the wheel and moving the heat source relative to the wheel whereby progressively to cause a formed layer of metallic material on the wheel;
repeating steps a) and b) as required whereby to form a recondition wheel.

2. A method according to claim 1 wherein the method further comprises the step of controlling rate the cooling of the formed layer to bring the formed layer to a state of crystallisation.

3. A method according to claim 2 wherein the method further comprises the step of stress relieving the formed layer.

4. A method according to claim 3 wherein the method of stress relieving comprises the step of applying ultra-sonic impact treatment to the formed layer.

5. A method according to claim 3 wherein the method of stress relieving comprises the step of applying a heat treatment to the formed layer.

6. A method according to any preceding claim wherein the method comprises a step of pre-heating the wheel prior to step a).

7. A method according to any preceding claim wherein the method comprises a step of adding a bonding layer to the wheel between step a) and step b).

8. A method according to claim 7 wherein the bonding layer is aluminium bronze.

9. A method according to any preceding claim wherein the metallic material is a high chrome stainless steel.

10. A method according to any preceding claim comprising the step of moving the heat source relative to the wheel, to provide an overlap of a plurality of formed layers of metallic material on the wheel.

11. A method according to any preceding claim wherein the formed layer of metallic material on the wheel forms an elongate bead or elongate ridge.

12. A method according to any preceding claim wherein a protective gas is used during the formation of the bonding layer or formed layer of metallic material on the wheel.

13. A method according to any preceding claim wherein the additive layer manufacturing method is selected from laser blown powder manufacture; laser powder bed manufacture, and wire arc additive manufacture.

14. A method of reconditioning a wheel for a tracked vehicle by additive layer manufacturing as hereinbefore described and/or as illustrated with reference to accompanying figures.

15. A recondition wheel for a tracked vehicle reconditioned using the method of any of claims 1 to 14.
